# EUROPÄISCHE PATENTSCHRIFT

(11) **EP 2 126 517 B1**
(45) Veröffentlichungstag und Bekanntmachung des Hinweises auf die Patenterteilung: **06.01.2016**
(21) Anmeldenummer: 08716197.2
(22) Anmeldetag: 03.03.2008
(51) Int. Cl.: G01D 5/20

(54) **INDUKTIVER INKREMENTALWEGGEBER UND VERFAHREN ZUM ERMITTELN DER VERSCHIEBUNG EINES ERSTEN OBJEKTS RELATIV ZU EINEM ZWEITEN OBJEKT**
INDUCTIVE INCREMENTAL DISPLACEMENT TRANSMITTER AND METHOD FOR DETERMINING THE DISPLACEMENT OF A FIRST OBJECT RELATIVE TO A SECOND OBJECT
CAPTEUR DE DÉPLACEMENT INCRÉMENTIEL INDUCTIF ET PROCÉDÉ DE DÉTERMINATION DU DÉCALAGE D'UN PREMIER OBJET PAR RAPPORT À UN DEUXIÈME OBJET

(30) Priorität: 01.03.2007 DE 102007010030
(43) Veröffentlichungstag der Anmeldung: 02.12.2009
(73) Patentinhaber: Pepperl + Fuchs GmbH, 68307 Mannheim (DE)
(72) Erfinder: SPECKMANN, Christian, 64625 Bensheim (DE); EHRENFRIED, Ulrich, 68239 Mannheim (DE)
(74) Vertreter: Schiffer, Axel Martin
(86) Internationale Anmeldenummer: PCT/EP2008/001678
(87) Internationale Veröffentlichungsnummer: WO 2008/104405

(56) Entgegenhaltungen:
- DE-A1- 19 701 319
- US-A1- 2001 020 846

## Beschreibung

Die vorliegende Erfindung betrifft in einem ersten Aspekt einen induktiven Inkrementalweggeber nach dem Oberbegriff des Anspruchs 1.

In einem weiteren Aspekt bezieht sich die Erfindung auf ein Verfahren zum Ermitteln der Verschiebung eines ersten Objekts relativ zu einem zweiten Objekt nach dem Oberbegriff des Anspruchs 8.

Ein gattungsgemäßer induktiver Inkrementalweggeber wird zum Bestimmen einer Verschiebung eines ersten Objekts relativ zu einem zweiten Objekt verwendet und ist beispielsweise aus DE 197 01 319 A1 bekannt. Ein solcher Inkrementalweggeber weist mindestens eine an dem ersten Objekt anzubringende Teilungsspur mit periodisch abwechselnd angeordneten leitenden Bereichen und isolierenden Bereichen, mindestens eine an dem zweiten Objekt anzubringende Abtasteinheit zum Abtasten der Teilungsspuren mit einer ersten Sensoreinheit und einer zweiten Sensoreinheit auf, die in einem seitlichen Abstand von d = n*(p/2)+q zueinander angeordnet sind, wobei n eine ganze Zahl oder Null, p die Periode der Teilungsspur und 0 < |q| < p/2 ist, insbesondere q = 0,25p. Außerdem ist eine Auswerteeinheit zum Bestimmen der Verschiebung auf Grundlage von Schaltsignalen, die die erste Sensoreinheit und die zweite Sensoreinheit liefern, vorgesehen.

Bei einem gattungsgemäßen Verfahren, welches ebenfalls in DE 197 01 319 A1 beschrieben ist, werden folgende Verfahrensschritte durchgeführt. An einem ersten Objekt wird mindestens eine Teilungsspur mit periodisch abwechselnd angeordneten leitenden Bereichen und isolierenden Bereichen angebracht. An einem zweiten Objekt wird eine Abtasteinheit zum Abtasten der Teilungsspur angebracht, wobei die Abtasteinheit mindestens eine erste Sensoreinheit und eine zweite Sensoreinheit aufweist, die in einem seitlichen Abstand d = n*(p/2)+q zueinander angeordnet sind, wobei n eine ganze Zahl oder Null ist, p die Periode der Teilungsspur ist und 0 < |q| < p/2, insbesondere q = 0,25p. Aus den Schaltsignalen der Sensoreinheiten wird die Verschiebung des ersten Objekts relativ zum zweiten Objekt bestimmt.

Eine gattungsgemäße induktive Sensoreinheit weist einen ersten induktiven Sensor und einen hierzu beabstandet angeordneten zweiten induktiven Sensor und außerdem eine Verarbeitungseinheit zum Verarbeiten der Nachweissignale des ersten und zweiten induktiven Sensors auf.

In US 2001/020846 A1 ist ein Positionsmessgerät mit induktiven Sensoren beschrieben, die auf dem Kopplungsprinzip beruhen. Dabei wird ein durch eine Antriebsspule erzeugter magnetischer Fluss durch Skalenelemente moduliert und eine Ankopplung an eine Nachweisspule wird dadurch verändert. Die Sensoren, in denen Empfangsspulen in Differenzschaltungen angeordnet sind, liefern zwei sinusartige und phasenversetzte Ausgangssignale.

Induktive Inkrementalweggeber sind außerdem in DE 31 00 486 A1, EP 1 071 927 B1, US-4,893,078, US-5,003,260, EP 1 164 358 A1, WO 2004/027994 A1 und DE 199 54 267 A1 beschrieben.

Inkrementalgeber werden zur Messung von Lageänderungen verwendet. Dabei bestimmen zwei zueinander versetzte Sensoren jeweils die Position einer Teilungsspur. Durch Zählen der Einzelimpulse kann die Bewegung der Teilungsspur relativ zu den Sensoren bestimmt werden. Da die von den beiden Sensoren erzeugten Signale einen Phasenversatz von beispielsweise 90° haben, ist zusätzlich eine Richtungserkennung möglich.

Wenn bei dem Inkrementalgeber induktive Sensoren eingesetzt werden, ergeben sich Schwierigkeiten aufgrund der Abhängigkeit des Schaltpunkts der Sensoren bei seitlicher Annäherung eines metallischen Objekts, beispielsweise eines leitenden Bereichs der Teilungsspur, von der Entfernung des Sensors zur Teilungsspur. Der leitende Bereich der Teilungsspur wird umso früher erkannt, je näher er sich vor dem Sensor befindet.

Aufgabe der Erfindung ist, einen induktiven Inkrementalgeber und ein Verfahren zum Ermitteln der Verschiebung eines ersten Objekts relativ zu einem zweiten Objekt zu schaffen, bei denen weitgehend unabhängig vom konkreten Abstand der eingesetzten Sensoren zu einer Teilungsspur zuverlässige Messresultate geliefert werden. Außerdem soll eine induktive Sensoreinheit geschaffen werden, mit der weitestgehend abstandsunabhängig die Lateralposition eines Zielobjekts bestimmt werden kann.

Diese Aufgabe wird in einem ersten Gesichtspunkt der Erfindung durch den induktiven Inkrementalweggeber mit den Merkmalen des Anspruchs 1 gelöst.

In einem zweiten Aspekt wird die Aufgabe durch das Verfahren mit den Merkmalen des Anspruchs 8 gelöst.

Der induktive Inkrementalgeber der oben genannten Art ist erfindungsgemäß dadurch weitergebildet, dass die erste Sensoreinheit und die zweite Sensoreinheit jeweils einen ersten induktiven Sensor und einen dazu beabstandet angeordneten zweiten induktiven Sensor aufweisen und dass die erste Sensoreinheit und die zweite Sensoreinheit dann ein zu einem leitenden Bereich der Teilungsspur gehörendes Schaltsignal liefern, wenn die Differenz oder das Verhältnis der durch diesen leitenden Bereich generierten Nachweissignale der zur jeweiligen Sensoreinheit gehörenden induktiven Sensoren kleiner als eine festzulegende Schwelle ist.

Das oben beschriebene Verfahren ist erfindungsgemäß dadurch weitergebildet, dass Sensoreinheiten mit jeweils einem ersten induktiven Sensor und einen dazu beabstandet angeordneten zweiten induktiven Sensor verwendet werden und dass die Sensoreinheiten so betrieben werden, dass sie ein zu einem leitenden Bereich der Teilungsspur gehörendes Schaltsignal liefern, wenn die Differenz oder das Verhältnis der durch diesen leitenden Bereich generierten Nachweissignale des zur jeweiligen Sensoreinheit gehörenden ersten induktiven Sensors und zweiten induktiven Sensors kleiner als eine festzulegende Schwelle ist.

Ein erster Kerngedanke der Erfindung besteht zunächst in der Erkenntnis, dass die Abstandsabhängigkeit der Nachweissignale von induktiven Sensoren für die Messsituation eines sich seitlich am Sensor vorbeibewegenden Zielobjekts in einfacher Weise durch den Einsatz von je zwei Sensoren pro Sensoreinheit weitestgehend ausgeschaltet werden kann.

Ein weiterer Kerngedanke kann sodann darin gesehen werden, dass die jeweils mindestens zwei induktive Sensoren aufweisenden Sensoreinheiten so betrieben werden, dass ein Schaltsignal geliefert wird, also ein Umschalten von EIN nach AUS oder umgekehrt stattfindet, sobald die von den zu einer Sensoreinheit gehörenden induktiven Sensoren gelieferten Nachweissignale praktisch gleich sind. Mit anderen Worten schaltet die Sensoreinheit um, wenn die Differenz oder das Verhältnis der Nachweissignale der beiden zugehörigen Sensoren kleiner als eine vorzugebende Schwelle ist.

Ein erster wesentlicher Vorteil der erfindungsgemäßen Lösung kann darin gesehen werden, dass mit einem einfachen Aufbau bereits eine weitestgehende Unabhängigkeit vom Abstand des Zielobjekts, insbesondere der Teilungsspur eines Inkrementalweggebers, erreicht wird. Hierdurch ergeben sich eine erheblich verbesserte Betriebssicherheit und eine höhere Zuverlässigkeit des induktiven Inkrementalweggebers und des entsprechenden Verfahrens.

Mit dem erfindungsgemäßen Sensor ist ein besonders präzises Schalten möglich, wobei das Schaltsignal sehr zuverlässig erfolgt, wenn das nachzuweisende Objekt genau mittig vor dem Sensor platziert ist.

Aus den vorgenannten Vorteilen und Eigenschaften ergeben sich neue Einsatzmöglichkeiten für induktive Inkrementalweggeber. Bisher bei solchen Vorrichtungen getroffene Vorkehrungen, die eine möglichst gute Konstanz des Abstands des Sensors zur Teilungsspur gewährleisten sollen, können dann weniger aufwendig dimensioniert werden, wodurch außerdem in erheblichem Umfang Kosten gespart werden können.

Die Begriffe leitender Bereich und isolierender Bereich sind hier relativ zu verstehen und weit auszulegen. Es kommt im Prinzip nur darauf an, dass die Bereiche der Teilungsspur in ihren Bedämpfungseigenschaften für induktive Sensoren hinreichend unterschiedlich sind, und somit hinreichend sicher durch diese induktiven Sensoren unterschieden werden können.

Bei einer besonders bevorzugten Variante des erfindungsgemäßen Inkrementalweggebers ist der zu einer Sensoreinheit gehörende erste induktive Sensor zum zweiten induktiven Sensor dieser Sensoreinheit so beabstandet angeordnet, dass das von einem leitenden Bereich der Teilungsspur generierte Nachweissignal des ersten Sensors sich gerade auf einer ansteigenden Flanke befindet, wenn sich das durch denselben leitenden Bereich generierte Nachweissignal des zweiten Sensors auf der abfallenden Flanke befindet. Wegen der im Bereich der Flanken großen Änderung der Nachweissignale mit der seitlichen Bewegung des Zielobjekts, hier also eines leitenden Bereichs der Teilungsspur, ist die Ortsempfindlichkeit groß und damit die Bestimmung der Mitte des leitenden Bereichs besonders präzise.

Quantitativ kann beispielsweise zweckmäßig sein, wenn der zu einer Sensoreinheit gehörende erste induktive Sensor so beabstandet zum zweiten induktiven Sensor dieser Sensoreinheit angeordnet ist, dass sich die von demselben leitenden Bereich der Teilungsspur generierten Nachweissignale des ersten Sensors und des zweiten Sensors aufgetragen gegen eine laterale Relativverschiebung der Teilungsspur gegen die Abtasteinheit in einem Bereich von +/- 20% des gesamten Signalhubs um die Mitte des Signalmaximums, bevorzugt +/- 10% und besonders bevorzugt von +/- 5% des gesamten Signalhubs um die Mitte des Signalmaximums schneiden.

Bei einer einfachen Ausgestaltung wird beispielsweise der zu einer Sensoreinheit gehörende erste induktive Sensor in einem Abstand von einer halben Periode der Teilungsspur zum zweiten induktiven Sensor dieser Sensoreinrichtung angeordnet.

Gegebenenfalls können die Sensoren und/oder die Sensoreinheiten in die Abtasteinheit so eingebaut sein, dass deren seitlicher Abstand, beispielsweise mit Justierschrauben, verstellbar ist.

Bei einer weiteren einfachen und bevorzugten Variante entspricht der Abstand des ersten Sensors zum zweiten Sensor einer Sensoreinheit der Ausdehnung eines leitenden Bereichs in Erstreckungsrichtung der Teilungsspur.

Besonders bevorzugt sind außerdem Ausgestaltungen, bei denen die leitenden Bereiche und die isolierenden Bereiche der Teilungsspur in Erstreckungsrichtung der Teilungsspur dieselbe Ausdehnung aufweisen. Ein besonderer Vorteil der Erfindung besteht gerade darin, dass sich für solche Teilungsspuren abstandsunabhängig ein konstantes Puls-Pausen-Verhältnis einstellen lässt. Eine weit entfernte Teilungsspur erzeugt pro Periode praktisch dasselbe Schaltsignal wie eine sehr dicht vor der Abtasteinheit angeordnete Teilungsspur. Insbesondere lässt sich aufgrund der Erfindung praktisch abstandsunabhängig das für eine Richtungserkennung gewünschte 1:1-Puls-Pausen-Verhältnis erreichen. Hierbei kann insbesondere auf einfache im Stand der Technik bekannte Verfahren zur Auswertung zurückgegriffen werden.

Der Abstand d der Sensoreinheiten beträgt bevorzugt d = np +/- 0,25p. Die Auswertung im Hinblick auf die Richtung der Relativbewegung gestaltet sich dann vergleichsweise einfach und es kann auf bekannte Auswertungsalgorithmen zurückgegriffen werden.

Die Teilungsspur kann grundsätzlich aus einer beliebigen in einer Erstreckungsrichtung periodischen Anordnung von leitenden und nicht leitenden Bereichen gebildet sein. Beispielsweise kann es sich um ein einfaches Lochgitter handeln.

Bei einer besonders bevorzugten Variante des erfindungsgemäßen Verfahrens wird die Schwelle zum Vermeiden von Schaltprellen unmittelbar nach einem Schaltereignis von einem ersten Wert S auf einen zweiten Wert H gesetzt, wobei der zweite Wert H insbesondere betragsmäßig größer sein kann als der erste Wert S, und die Schwelle wird wieder auf den ersten Wert S gesetzt, sobald das Nachweissignal des ersten induktiven Sensors um mehr als den zweiten Wert H vom Nachweissignal des zweiten Sensors abweicht. S kann für diese und auch für sonstige Anwendungen sehr klein, insbesondere nahe 0, sein. Wenn S sehr klein ist, bedeutet dies, dass ein Schaltvorgang ausgelöst wird, wenn die Nachweissignale des ersten und des zweiten Sensors praktisch gleich sind.

Mit diesem besonderen Verfahren einer richtungsabhängigen Hysterese wird ein Prellen im Umschaltpunkt vermieden und es wird insbesondere ein richtungsunabhängiger Schaltpunkt erreicht.

Weitere Merkmale, Eigenschaften und Vorteile der Erfindung werden nachstehend mit Bezug auf die beiliegenden schematischen Figuren beschrieben.

Hierin zeigt:
- Fig. 1: eine schematische Darstellung eines Ausführungsbeispiels des erfindungsgemäßen induktiven Inkrementalweggebers;
- Fig. 2: einen Inkrementalweggeber nach dem Stand der Technik;
- Fig. 3: eine schematische Darstellung zur Erläuterung der Funktionsweise einer erfindungsgemäßen induktiven Sensoreinheit; und
- Fig. 4: eine schematische Darstellung der Funktionsweise eines erfindungsgemäßen induktiven Inkrementalweggebers.

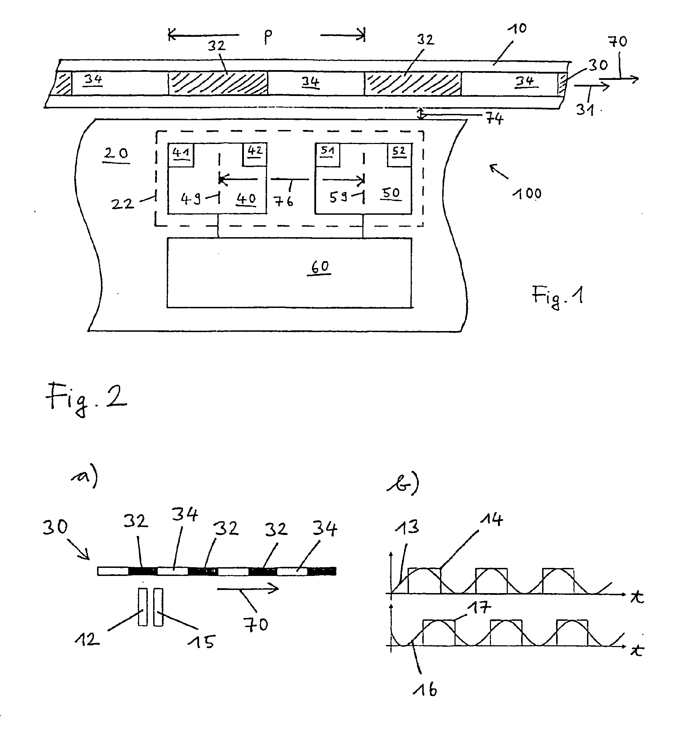

Zunächst wird mit Bezug auf Fig. 2 ein Inkrementalweggeber nach dem Stand der Technik beschrieben. Im Wesentlichen wird bei diesem Messprinzip eine Teilungsspur 30 mit einer periodischen Anordnung von leitenden Bereichen 32 und nichtleitenden Bereichen 34 an einem in Fig. 2a) nicht gezeigten ersten Objekt und eine Abtasteinheit mit zwei induktiven Sensoren 12, 15 an einem in Fig. 2a) ebenfalls nicht dargestellten zweiten Objekt angebracht.

Eine Relativbewegung oder Verschiebung des ersten Objekts relativ zum zweiten Objekt, also der Teilungsspur 30 relativ zu dem Paar von Sensoren 12, 15 ist durch einen Pfeil 70 angedeutet. Die Sensoren 12, 15 sind induktive Sensoren, die eine Bedämpfung eines Oszillators durch ein in der Nähe befindliches metallisches Objekt, im vorliegenden Fall ein leitender Bereich 32 der Teilungsspur 30, auswerten und hieraus ein Nachweissignal erzeugen. Die bei Verschiebung der Teilungsspur 30 relativ zu den Sensoren 12, 15 generierten Nachweissignale 13, 16 sind im Diagramm in Fig. 2b) schematisch gegen die Zeitachse t aufgetragen. Mit dem Bezugszeichen 13 ist dabei das Nachweissignal des induktiven Sensors 12 und entsprechend mit dem Bezugszeichen 16 das Nachweissignal des Sensors 15 gekennzeichnet. Die Sensoren 12 und 15 sind etwa im Abstand einer Viertelperiode der Teilungsspur 30 relativ zueinander angeordnet, so dass die im Wesentlichen sinusartigen Nachweissignale 13 und 16 einen Phasenversatz von etwa 90° aufweisen. Bei der durch den Pfeil 70 angedeuteten Bewegungsrichtung eilt dabei das Nachweissignal 13 des Sensors 12 dem Nachweissignal 16 des Sensors 15 voraus. Im Allgemeinen werden die sinusartigen Nachweissignale 13, 16 in Rechtecksignale 14, 17 umgewandelt, die mit Hilfe einfacher und grundsätzlich bekannter Logikschaltungen ausgewertet werden.

Aus der relativen zeitlichen Abfolge der Signale kann dabei auf die Richtung der Relativbewegung und aus der Frequenz der Nachweissignale auf den Betrag der Geschwindigkeit geschlossen werden.

Bei Verwendung von konventionellen Sensoren ist der Schaltpunkt bei seitlicher Annäherung abhängig von der Entfernung der Sensoren von der Teilungsspur. Wenn beispielsweise ein Lochblech als Teilungsraster verwendet wird, wird der Steg eines solchen Lochblechs umso früher erkannt, je näher er sich vor dem Sensor befindet. Dies bedeutet auch, dass sich ein konstantes Puls-Pausen-Verhältnis nicht einstellen lässt. Ein weit entferntes Lochblech erzeugt je Periode nur ein kurzes Bedämpftsignal, während ein nahes Lochblech ein sehr langes Bedämpftsignal und nur ein kurzes Entdämpftsignal bewirkt. Das für die Richtungserkennung gewünschte 1:1-Puls-Pausen-Verhältnis lässt sich mit konventionellen induktiven Sensoren nur für einen ganz bestimmten Abstand erzeugen. Hier schafft die Erfindung Abhilfe.

Ein Ausführungsbeispiel eines erfindungsgemäßen induktiven Inkrementalweggebers, bei dem die genannten Schwierigkeiten beseitigt werden, wird mit Bezug auf Fig. 1 sowie 3 und 4 beschrieben.

Der in Fig. 1 schematisch gezeigte erfindungsgemäße induktive Inkrementalweggeber 100 weist als wesentliche Komponenten eine an einem ersten Objekt 10 angebrachte Teilungsspur 30, eine an einem zweiten Objekt 20 angebrachte Abtasteinheit 22 und eine, bei diesem Ausführungsbeispiel ebenfalls am zweiten Objekt 20 angebrachte Auswerteeinheit 60 auf. Mit Hilfe des Inkrementalweggebers 100 kann eine durch einen Pfeil 70 angedeutete Relativbewegung des ersten Objekts 10 bezüglich dem zweiten Objekt 20 weitgehend unabhängig vom Abstand 74 der Objekte voneinander bestimmt werden.

Die Teilungsspur 30 besteht aus regelmäßig mit einer Periode p abwechselnd angeordneten elektrisch leitenden Bereichen 32 und elektrisch nichtleitenden Bereichen 34. Im gezeigten Beispiel weisen die leitenden Bereiche 32 und die nichtleitenden Bereiche 34 in Erstreckungsrichtung 31 der Teilungsspur 30 jeweils dieselbe Ausdehnung auf. Grundsätzlich sind hier aber auch andere Tastverhältnisse möglich. Erfindungsgemäß weist die Abtasteinheit 22 zwei erfindungsgemäße induktive Sensoreinheiten 40, 50 auf. Die erste induktive Sensoreinheit 40 weist einen ersten induktiven Sensor 41 und einen zweiten induktiven Sensor 42 auf, die im gezeigten Beispiel in einem seitlichen Abstand von 0,5p der Teilungsspur 30 oder, was für dieses Ausführungsbeispiel gleichbedeutend ist, in einem der Länge eines leitenden Bereichs 32 entsprechenden Abstand angeordnet sind.

Unter dem Abstand zwischen den Sensoren 41, 42 soll hier im Wesentlichen der Abstand der Spulenachsen der zu den jeweiligen induktiven Sensoren gehörenden Spulen verstanden werden.

Entsprechend umfasst die zweite induktive Sensoreinheit 50 einen ersten induktiven Sensor 51 und einen zweiten induktiven Sensor 52, die ebenfalls in einem seitlichen Abstand von 0,5p angeordnet sind. Mit den Bezugszeichen 49 und 59 sind Mittenachsen der Sensoreinheiten 40, 50 gekennzeichnet. Diese Mittenachsen 49, 59 weisen in Erstreckungsrichtung 31 der Teilungsspur 30 einen Abstand 76 von 0,75p auf. Allgemeiner formuliert kann dieser Abstand erfindungsgemäß n*(p/2) + 0,25p betragen, wobei n eine natürliche Zahl oder Null ist und p die Periode der Teilungsspuren ist.

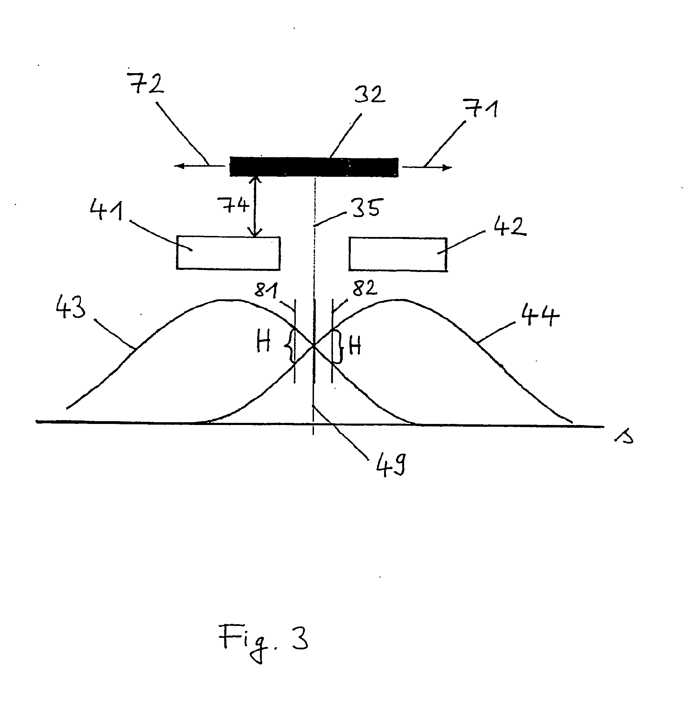

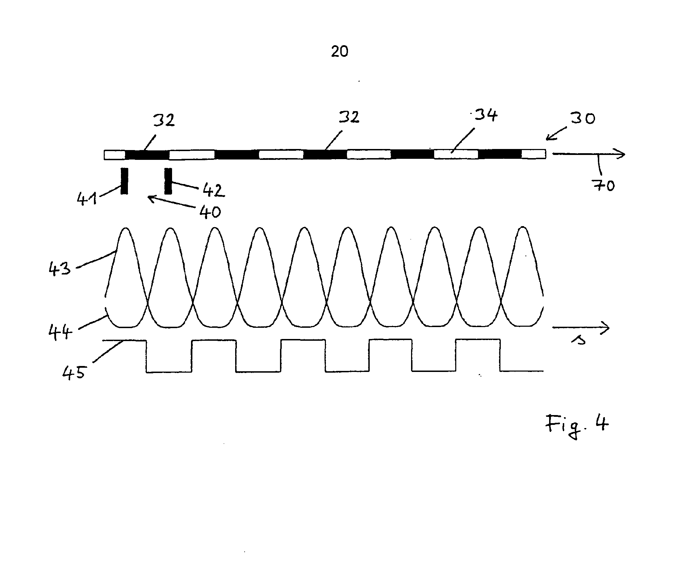

Das Wesentliche der erfinderischen Idee wird mit Bezug auf die Figuren 3 und 4 erläutert. Äquivalente Komponenten sind in allen Figuren mit denselben Bezugszeichen versehen.

Fig. 3 zeigt schematisch einen ersten induktiven Sensor 41 und einen zweiten induktiven Sensor 42, die zu ein und derselben, hier nicht mit weiteren Details dargestellten erfindungsgemäßen Sensoreinheit 40 gehören. Über den induktiven Sensoren 41, 42 ist schematisch ein metallisches Target 32 gezeigt, wobei es sich insbesondere um einen leitenden Bereich 32 einer Teilungsspur 30 handeln kann.

Unter den induktiven Sensoren 41, 42 sind in Fig. 3 schematisch die durch die Sensoren 41, 42 generierten Nachweissignale 43, 44 gegen eine Verschiebung s des Targets 32 relativ zu den Sensoren 41, 42 aufgetragen. Eine Symmetrieachse des Targets 32 ist mit dem Bezugszeichen 35 versehen. Bewegt sich das Target 32 in Richtung des Pfeils 72, nimmt das Nachweissignal 44 des Sensors 42 ab, wohingegen das Nachweissignal 43 des Sensors 41 bis zu einem Maximum ansteigt. Andererseits nimmt das Nachweissignal 44 des Sensors 42 bis zu einem Maximum zu und das Nachweissignal 43 des Sensors 41 nimmt entsprechend ab, wenn sich das Target 32 in Richtung des Pfeils 71 bewegt. Wegen der Abhängigkeit der Nachweissignale 43, 44 vom Abstand 74 der Sensoren 41, 42 zum Target 32 kann aus den einzelnen Signalen für sich genommen die laterale Position des Targets 32 relativ zu den Sensoren 41, 42 nur vergleichsweise ungenau bestimmt werden.

Wenn aber, wie bei der in Fig. 3 gezeigten Situation, die Mittenachse 35 des Targets 32 sich exakt zwischen den induktiven Sensoren 41, 42 befindet, also mit der Mittenachse 49 der Sensoreinheit 40 zusammenfällt, sind die Nachweissignale 41, 42 im Wesentlichen gleich groß oder weichen, mit anderen Worten, um weniger als eine festzulegende kleine Schwelle voneinander ab. Mit Hilfe der erfindungsgemäßen induktiven Sensoreinheit kann demnach sehr genau bestimmt werden, wann sich ein nachzuweisendes Target 32 exakt mittig vor der Sensoreinheit 40 befindet. Diese erfindungsgemäße induktive Sensoreinheit weist insbesondere für den Einsatz bei induktiven Inkrementalweggebern erhebliche Vorteile auf, was im Zusammenhang mit Fig. 4 erläutert wird.

Dort sind wiederum schematisch eine Teilungsspur 30 sowie induktive Sensoren 41, 42 einer Sensoreinheit 40 dargestellt.

Bei dem erfindungsgemäßen Verfahren werden pro Sensoreinheit zwei Spulen oder Sensoren zur Detektion eines Targets, insbesondere also eines leitenden Bereichs 32 einer Teilungsspur 30, verwendet. Diese Spulen haben beispielsweise einen Abstand von einer halben Loch-Steg-Periode, also 0,5p. Wenn sich also das Target mittig vor der Sensoreinheit befindet, fallen die Spulenachsen mit den Kanten des Targets zusammen. Geschaltet wird nun, wenn die Signale beider Sensoren gleich groß sind. Dies ist unabhängig von der Targetentfernung dann der Fall, wenn sich das Target genau in der Mitte zwischen den beiden Einzelsensoren befindet. Da das Lochgitter bei einer bevorzugten Ausgestaltung ein 1:1-Verhältnis zwischen Steg- und Lochbreite besitzt, lässt sich in der Lochmitte ein Ausschaltsignal generieren, so dass auch hier ein 1:1-Tastverhältnis erzeugt werden kann. Ist das analoge Ausgangssignal des ersten Sensors größer als das des zweiten Sensors, wird das Schaltsignal eingeschaltet, ansonsten jedoch ausgeschaltet. Die Positionen dieser Ein- und Ausschaltpunkte sind weitgehend unabhängig von der Gitterentfernung und der Form der Anfahrkurve.

Mit einem solchen Sensorpaar lässt sich also ein exaktes, abstandsunabhängiges Rechtecksignal generieren, wie in Fig. 4 dargestellt. Durch Verwendung eines zweiten Sensorpaars, also einer zweiten Sensoreinheit in einem Abstand von 0,25p oder, wie in Fig. 1 von 0,75p, ist die Erzeugung eines zweiten Signals mit 90 Grad Phasenversatz möglich. Auf diese Weise lässt sich ein sehr exakter Inkrementalweggeber konstruieren. Aufgetragen gegen einen Verschiebeweg s sind außerdem die Nachweissignale 43, 44 der Sensoren 41, 42, die aufgrund der Anordnung der Sensoren 41, 42 im Abstand von 0,5p gegenphasig sind. Immer wenn die Nachweissignale 43, 44 gleichgroß sind, sich die Kurven 43, 44 also schneiden, liefert die Sensoreinheit 40 ein Schaltsignal 45, welches in Fig. 4 ebenfalls gegen den Verschiebeweg s aufgetragen ist. Das Schaltsignal ist HIGH beziehungsweise LOW, wenn das Signal 43 größer beziehungsweise kleiner ist als das Signal 44. Im Ergebnis führt dies dazu, dass das Schaltsignal 45 immer genau in dem Moment wechselt, wenn der leitende Bereich 32 exakt mittig vor der Sensoreinheit 40 steht.

Wegen der oben beschriebenen Eigenschaften der erfindungsgemäßen induktiven Sensoreinheit 40 erfolgt dies weitestgehend unabhängig vom Abstand der Sensoreinheit 40 von der Teilungsspur 30.

Eine Variante des erfindungsgemäßen Verfahrens wird mit Bezug auf Fig. 3 erläutert. Um ein Schaltprellen zu vermeiden, außerdem aber einen richtungsunabhängigen Schaltpunkt beizubehalten, wird bei dieser Variante eine richtungsabhängige Hysterese verwendet. Wie oben erläutert, schaltet die Sensoreinheit 40, beispielsweise bei Bewegung des Targets 32 in Richtung des Pfeils 72, exakt dann, wenn das Nachweissignal 43 des induktiven Sensors 41 größer wird als das Signal 44 des Sensors 42. Bleibt die Lochschiene, die die Teilungsspur bildet, genau in dieser Stellung, besteht die Gefahr des Prellens, wenn durch Vibrationen oder Störimpulse das Signal 44 für kurze Zeit größer wird als das Signal 43 und die Sensoreinheit 40 deshalb in rascher Folge hin und her schaltet. Um dies zu vermeiden, wird nach dem ersten Umschaltvorgang, wenn das Signal 43 erstmals größer wird, als das Signal 44, die Ausschaltschwelle zunächst um einen bestimmten Wert unter die Einschaltschwelle gesetzt, das heißt es wird erst dann wieder ausgeschaltet, wenn das Signal 44 um mehr als den Betrag H größer oder kleiner ist als das Signal 43. Erst wenn sich die Lochschiene, also die Teilungsspur, weiterbewegt und das Nachweissignal 43 deutlich größer als das Nachweissignal 44 wird, nämlich um mehr als H, wird die Ausschaltschwelle wieder umgeschaltet und die Ausschaltbedingungen wieder auf Nachweissignal 44 größer als Nachweissignal 43 gelegt. In der Praxis schaltet der Ausgang dann richtungsunabhängig im gleichen Schaltpunkt, prellt aber aufgrund der vorhandenen Hysterese nicht. Die entsprechenden Wegstrecken, die dem Umschalten der Hysterese entsprechen, sind in Fig. 3 mit vertikalen Markierungen 81, 82 versehen.

Die beiden oben beschriebenen Verfahren lassen sich auch jeweils einzeln einsetzen. So kann mit Hilfe zweier Sensorspulen generell eine Mittenerkennung durchgeführt werden, wodurch ein Sensor mit konstantem lateralem Schaltpunkt geschaffen werden kann.

Weiterhin kann durch Umschalten der Hysterese, je nach Vorgeschichte des Sensors, ein Sensor konstruiert werden, dessen Schaltpunkt unabhängig von der Bewegungsrichtung immer im selben Punkt liegt und gleichwohl ein Schaltprellen mit hoher Zuverlässigkeit vermieden wird.

Mit der vorliegenden Erfindung wird ein induktiver Inkrementalweggeber, ein Verfahren zur Ermittlung der Relativverschiebung zweier Objekte sowie eine induktive Sensoreinheit bereitgestellt, mit welcher weitgehend unabhängig vom Abstand der beiden Objekte deren relative Lateralposition sehr exakt bestimmt werden kann. Hierdurch ergeben sich vielfältige neue Anwendungen und an Verfahren, die Abstände jeweils konstant zu halten, sind deutlich geringere Anforderungen gestellt.

## Patentansprüche

1. Induktiver Inkrementalweggeber zum Bestimmen einer Verschiebung eines ersten Objekts (10) relativ zu einem zweiten Objekt (20),
mit mindestens einer an dem ersten Objekt (10) anzubringenden Teilungsspur (30), die periodisch abwechselnd angeordnet leitende Bereiche (32) und isolierende Bereiche (34) aufweist,
mit mindestens einer an dem zweiten Objekt (20) anzubringenden Abtasteinheit (22) zum Abtasten der Teilungsspur (30) mit einer ersten Sensoreinheit (40) und einer zweiten Sensoreinheit (50), die in einem seitlichen Abstand d = n*(p/2)+q zueinander angeordnet sind, wobei n eine ganze Zahl oder Null, p die Periode der Teilungsspur (30) und 0 < |q| < p/2 ist, insbesondere q = 0,25p, und
mit einer Auswerteeinheit (60) zum Bestimmen der Verschiebung auf Grundlage von Schaltsignalen, die die erste Sensoreinheit (40) und die zweite Sensoreinheit (50) liefern,
**dadurch gekennzeichnet,**
**dass** die erste Sensoreinheit (40) und die zweite Sensoreinheit (50) jeweils einen ersten induktiven Sensor (41, 51) und einen dazu beabstandet angeordneten zweiten induktiven Sensor (42, 52) aufweisen,
**dass** die leitenden Bereiche (32) und die isolierenden Bereiche (34) für die ersten induktiven Sensoren (41, 51) und die zweiten induktiven Sensoren (42, 52) unterschiedliche Bedämpfungseigenschaften aufweisen und aufgrund dieser unterschiedlichen Bedämpfungseigenschaften durch die ersten induktiven Sensoren (41, 51) und die zweiten induktiven Sensoren (42, 52) unterscheidbar sind und dass die erste Sensoreinheit (40) und die zweite Sensoreinheit (50) dann ein zu einem leitenden Bereich (32) der Teilungsspur (30) gehörendes Schaltsignal (45) liefern, wenn die Differenz oder das Verhältnis der durch diesen leitenden Bereich (32) generierten Nachweissignale der zur jeweiligen Sensoreinheit (40, 50) gehörenden induktiven Sensoren (41, 42, 51, 52) kleiner als eine festzulegende Schwelle ist,
wobei beim Liefern eines Schaltsignals ein Umschalten von EIN nach AUS oder umgekehrt stattfindet.

2. Inkrementalweggeber nach Anspruch 1,
**dadurch gekennzeichnet,**
**dass** der zu einer Sensoreinheit (40, 50) gehörende erste induktive Sensor (41, 51) zum zweiten induktiven Sensor (42, 52) dieser Sensoreinheit (40, 50) so beabstandet angeordnet ist, dass das von einem leitenden Bereich (32) der Teilungsspur (30) generierte Nachweissignal (43) des ersten Sensors (41, 51) sich gerade auf einer ansteigenden Flanke befindet wenn sich das durch denselben leitenden Bereich (32) generierte Nachweissignal (44) des zweiten Sensors (42, 52) auf der abfallenden Flanke befindet,

3. Inkrementalweggeber nach Anspruch 1 oder 2,
**dadurch gekennzeichnet,**
**dass** der zu einer Sensoreinheit (40, 50) gehörende erste induktive Sensor (41, 51) so beabstandet zum zweiten induktiven Sensor (42, 52) dieser Sensoreinheit (40, 50) angeordnet ist, dass sich die von demselben leitenden Bereich (32) der Teilungsspur generierten Nachweissignale (43, 44) des ersten Sensors (41, 51) und des zweiten Sensors (42, 52) aufgetragen gegen eine laterale Relativverschiebung der Teilungsspur gegen die Abtasteinheit in einem Bereich von +/-20% des gesamten Signalhubs um die Mitte des Signalmaximums, bevorzugt +/-10% und besonders bevorzugt +/- 5% des gesamten Signalhubs um die Mitte des Signalmaximums schneiden.

4. Inkrementalweggeber nach einem der Ansprüche 1 bis 3,
**dadurch gekennzeichnet,**
**dass** der zu einer Sensoreinrichtung (40, 50) gehörende erste induktive Sensor (41, 51) in einem Abstand von einer halben Periode p der Teilungsspur (30) zum zweiten induktiven Sensor (42, 52) dieser Sensoreinrichtung (40, 50) angeordnet ist.

5. Inkrementalweggeber nach einem der Ansprüche 1 bis 4,
**dadurch gekennzeichnet,**
**dass** der Abstand des ersten Sensors (41, 51) zum zweiten Sensor (42, 52) einer Sensoreinheit (40, 50) der Ausdehnung eines leitenden Bereichs (32) in Erstrekkungsrichtung (31) der Teilungsspur (30) entspricht.

6. Inkrementalweggeber nach einem der Ansprüche 1 bis 5,
**dadurch gekennzeichnet,**
die leitenden Bereiche (32) und die isolierenden Bereiche (34) in Erstreckungsrichtung (31) der Teilungsspur (30) dieselbe Ausdehnung aufweisen.

7. Inkrementalweggeber nach einem der Ansprüche 1 bis 6,
**dadurch gekennzeichnet,**
**dass** die Teilungsspur (30) durch ein Lochgitter gebildet ist.

8. Verfahren zum Ermitteln der Verschiebung eines ersten Objekts relativ zu einem zweiten Objekt,
unter Verwendung eines Inkrementalweggebers nach einem Ansprüche 1 bis 7, bei dem an dem ersten Objekt (10) mindestens eine Teilungsspur (30) mit periodisch abwechselnd angeordneten leitenden Bereichen (32) und isolierenden Bereichen (34) angebracht wird,
bei dem an dem zweiten Objekt (20) eine Abtasteinheit (22) zum Abtasten der Teilungsspur (30) angebracht wird,
wobei die Abtasteinheit (22) mindestens eine erste Sensoreinheit (40) und eine zweite Sensoreinheit (50) aufweist, die in einem seitlichen Abstand d = n*(p/2)+q zueinander angeordnet sind, wobei n eine ganze Zahl, p die Periode der Teilungsspur (30) und 0 < |q| < p/2 ist, insbesondere q = 0,25p, und
wobei aus Schaltsignalen der Sensoreinheiten (40, 50) die Verschiebung bestimmt wird,
**dadurch gekennzeichnet,**
**dass** Sensoreinheiten (40, 50) mit jeweils einem ersten induktiven Sensor (41, 51) und einem dazu beabstandet angeordneten zweiten induktiven Sensor (42, 52) verwendet werden,
**dass** die leitenden Bereiche (32) und die isolierenden Bereiche (34) für die ersten induktiven Sensoren (41, 51) und die zweiten induktiven Sensoren (42, 52) unterschiedliche Bedämpfungseigenschaften aufweisen und aufgrund dieser unterschiedlichen Bedämpfungseigenschaften durch die ersten induktiven Sensoren (41, 51) und die zweiten induktiven Sensoren (42, 52) unterscheidbar sind und dass die Sensoreinheiten (40, 50) so betrieben werden, dass sie ein zu einem leitenden Bereich (32) der Teilungsspur (30) gehörendes Schaltsignal (45) liefern, wenn die Differenz oder das Verhältnis der durch diesen leitenden Bereich (32) generierten Nachweissignale (43, 44) des zur jeweiligen Sensoreinheit (40, 50) gehörenden ersten induktiven Sensors (41, 51) und zweiten induktiven Sensors (42, 52) kleiner als eine festzulegende Schwelle ist,
wobei beim Liefern eines Schaltsignals ein Umschalten von EIN nach AUS oder umgekehrt stattfindet.

9. Verfahren nach Anspruch 8,
**dadurch gekennzeichnet,**
**dass** die Schwelle zum Vermeiden von Schaltprellen unmittelbar nach einem Schaltereignis von einem ersten Wert S auf einen zweiten Wert H gesetzt wird und
**dass** die Schwelle wieder auf den ersten Wert S gesetzt wird, sobald das Nachweissignal des ersten induktiven Sensors (41, 51) um mehr als den zweiten Wert H vom Nachweissignal des zweiten Sensors (42, 52) abweicht.

## Claims

1. An inductive incremental displacement sensor for determining a displacement of a first object (10) relative to a second object (20),
comprising at least one graduated track (30) mountable on the first object (10) and having periodically alternating conductive regions (32) and insulating regions (34); comprising at least one scanning unit (22) mountable on the second object (20) for scanning the graduated track (30) with a first sensor unit (40) and a second sensor unit (50), which are laterally spaced from each other by a distance d=n*(p/2)+q, wherein n is an integer or zero, p is a pitch of the graduated track (30), and 0<|q|<p/2, in particular q = 0,25 p, and
an evaluation unit (60) for determining the displacement based on switching signals delivered by the first sensor unit (40) and the second sensor unit (50);
**characterized in**
**that** the first sensor unit (40) and the second sensor unit (50) each have a first inductive sensor (41, 51) and a second inductive sensor (42, 52) spaced at a distance from each other,
**that** the conductive regions (32) and the insulating regions (34) have different damping properties for the first inductive sensors (41, 51) and the second inductive sensors (42, 52) and can be differentiated by the first inductive sensors (41, 51) and by the second inductive sensors (42, 52) based on these different damping properties; and
**that** the first sensor unit (40) and the second sensor unit (50) deliver a switching signal (45) relevant to a conductive region (32) of the graduated track (30) when the difference or the ratio of the detection signals from the inductive sensors (41, 42, 51, 52) allocated to the respective sensor unit (40, 50) as generated by this conductive region (32) is less than a specifiable threshold,
wherein, when a switching signal is delivered, a switching from ON to OFF or vice versa takes place.

2. The incremental displacement sensor as defined in claim 1,
**characterized in**
**that** the first inductive sensor (41, 51) allocated to a sensor unit (40, 50) is disposed at a distance from the second inductive sensor (42, 52) of this sensor unit (40, 50) such that the detection signal (43) from the first sensor (41, 51) generated by a conductive region (32) of the graduated track (30) lies on an ascending slope when the detection signal (44) from the second sensor (42, 52) generated by the same conductive region (32) lies on the descending slope.

3. The incremental displacement sensor as defined in claim 1 or 2,
**characterized in**
**that** the first inductive sensor (41, 51) allocated to a sensor unit (40, 50) is disposed at a distance from the second inductive sensor (42, 52) of this sensor unit (40, 50) such that the detection signals (43, 44) from the first sensor (41, 51) and from the second sensor (42, 52) generated by the same conductive region (32) of the graduated track plotted against a lateral relative displacement of the graduated track relative to the scanning unit intersect in a region of +/-20% of the total signal range about the center of the signal maximum, preferably +/-10% and particularly +/-5% of the total signal range about the center of the signal maximum.

4. The incremental displacement sensor as defined in one of the claims 1 to 3,
**characterized in**
**that** the first inductive sensor (41, 51) allocated to a sensor unit (40, 50) is disposed at a distance of half the pitch p of the graduated track (30) from the second inductive sensor (42, 52) of this sensor device (40, 50).

5. The incremental displacement sensor as defined in one of the claims 1 to 4,
**characterized in**
**that** the distance of the first sensor (41, 51) from the second sensor (42, 52) of a sensor unit (40, 50) is equal to a length of a conductive region (32) in a longitudinal direction (31) of the graduated track (30).

6. The incremental displacement sensor as defined in one of the claims 1 to 5,
**characterized in**
**that** the conductive regions (32) and the insulating regions (34) are of the same length in the longitudinal direction (31) of the graduated track (30).

7. The incremental displacement sensor as defined in one of the claims 1 to 6,
**characterized in**
**that** the graduated track (30) is formed by a perforated grid.

8. A method for determining a displacement of a first object relative to a second object,
wherein an incremental displacement sensor as defined in one of the claims 1 to 7 is used,
wherein at least one graduated track (30) having periodically alternating conductive regions (32) and insulating regions (34) is mounted on the first object (10), wherein a scanning unit (22) for scanning the graduated track (30) is mounted on the second object (20),
wherein the scanning unit (22) has at least one first sensor unit (40) and a second sensor unit (50) spaced from each other at a lateral distance d=n*(p/2)+q, wherein n is an integer, p is a pitch of the graduated track, and 0<|q|<p/2, in particular q = 0,25 p, and
wherein the displacement is determined from switching signals delivered by the sensor units (40, 50),
**characterized in**
**that** sensor units (40, 50) having in each case a first inductive sensor (41, 51) and a second inductive sensor (42, 52) disposed at a distance therefrom are used,
**that** the conductive regions (32) and the insulating regions (34) have different damping properties for the first inductive sensors (41, 51) and the second inductive sensors (42, 52) and can be differentiated by the first inductive sensors (41, 51) and by the second inductive sensors (42, 52) based on these different damping properties, and
**that** the sensor units (40, 50) are operated such that they provide a switching signal allocated to a conductive region (32) of the graduated track (30) when the difference or the ratio of the detection signals (43, 44) from the first inductive sensor (41, 51) and from the second inductive sensor (42, 52) allocated to the respective sensor unit (40, 50) as generated by this conductive region (32) is smaller than a specifiable threshold,
wherein, when a switching signal is delivered, a switching from ON to OFF or vice versa takes place.

9. The method as defined in claim 8,
**characterized in**
**that** the threshold for avoiding switch bouncing is set immediately after a switching event from a first value S to a second value H and that the threshold is reset to the first value S when the detection signal from the first inductive sensor (41, 51) deviates from the detection signal from the second sensor (42, 52) by more than the second value H.

## Revendications

1. Capteur de déplacement incrémentiel inductif pour la détermination d'un décalage d'un premier objet (10) par rapport à un deuxième objet (20),
avec au moins une voie de séparation (30) à appliquer sur le premier objet (10), qui est composée de zones conductrices (32) et de zones isolantes (34) disposées de manière périodiquement alternée,
avec au moins une unité de balayage (22) à appliquer sur le deuxième objet (20) pour le balayage de la voie de séparation (30) avec une première unité de détection (40) et une deuxième unité de détection (50) qui sont disposées l'une par rapport à l'autre selon une distance latérale d = n*(p/2) + q , où n est un nombre entier ou nul, p est la période de la voie de séparation (30), et 0 < |q| < p/2, avec plus particulièrement q = 0,25 p, et
avec une unité d'évaluation (60) pour la détermination du décalage sur la base de signaux de commutation que fournissent la première unité de détection (40) et la deuxième unité de détection (50),
**caractérisé :**
**en ce que** la première unité de détection (40) et la deuxième unité de détection (50) comprennent chacune un premier capteur inductif (41, 51) et un deuxième capteur inductif (42, 52) disposé à distance de ce dernier,
**en ce que** les zones conductrices (32) et les zones isolantes (34) présentent des propriétés d'atténuation différentes pour les premiers capteurs inductifs (41, 51) et pour les deuxièmes capteurs inductifs (42, 52) et peuvent être distinguées par les premiers capteurs inductifs (41, 51) et les deuxièmes capteurs inductifs (42, 52) sur la base de ces propriétés d'atténuation différentes, et
**en ce que** la première unité de détection (40) et la deuxième unité de détection (50) fournissent alors un signal de commutation (45) appartenant à une zone conductrice (32) de la voie de séparation (30) si la différence ou le rapport des signaux de détection générés par cette zone conductrice (32) des capteurs inductifs (41, 42, 51, 52) appartenant respectivement à chaque unité de détection (40, 50) est plus faible qu'un seuil déterminé,
une commutation de MARCHE à ARRÊT, ou inverse, étant effectuée lors de la fourniture d'un signal de commutation,.

2. Capteur de déplacement incrémentiel selon la revendication 1,
**caractérisé :**
**en ce que** le premier capteur inductif (41, 51) appartenant à une unité de détection (40, 50) est espacé du deuxième capteur inductif (42, 52) de cette unité de détection (40, 50) de telle sorte que le signal de détection (43) généré par une zone conductrice (32) de la voie de séparation (30) du premier capteur (41, 51) se trouve juste sur un front montant si le signal de détection (44) généré par la même zone conductrice (32) du deuxième capteur inductif (42, 52) se trouve sur le front descendant.

3. Capteur de déplacement incrémentiel selon la revendication 1 ou 2,
**caractérisé :**
**en ce que** le premier capteur inductif (41, 51) appartenant à une unité de détection (40, 50) est espacé du deuxième capteur inductif (42, 52) de cette unité de détection (40, 50) de telle sorte que les signaux de détection (43, 44) générés par la même zone conductrice (32) de la voie de séparation du premier capteur (41, 51) et du deuxième capteur (42, 52), appliqués par rapport à un décalage relatif latéral de la voie de séparation contre l'unité de balayage, se coupent dans une plage de +/- 20 % de l'amplitude du signal autour du milieu du maximum du signal, de préférence +/- 10 % et encore davantage de préférence +/- 5 % de l'amplitude du signal autour du milieu du maximum du signal.

4. Capteur de déplacement incrémentiel selon une des revendications 1 à 3,
**caractérisé :**
**en ce que** le premier capteur inductif (41, 51) appartenant à un dispositif de détection (40, 50) est disposé à une distance d'une demi-période p de la voie de séparation (30) par rapport au deuxième capteur inductif (42, 52) de ce dispositif de détection (40, 50).

5. Capteur de déplacement incrémentiel selon une des revendications 1 à 4,
**caractérisé :**
**en ce que** la distance séparant le premier capteur (41, 51) du deuxième capteur (42, 52) d'une unité de détection (40, 50) correspond à l'étalement d'une zone conductrice (32) dans la direction d'extension (31) de la voie de séparation (30).

6. Capteur de déplacement incrémentiel selon une des revendications 1 à 5,
**caractérisé :**
**en ce que** les zones conductrices (32) et les zones isolantes (34) présentent le même étalement dans la direction d'extension (31) de la voie de séparation (30).

7. Capteur de déplacement incrémentiel selon une des revendications 1 à 6,
**caractérisé :**
**en ce que** la voie de séparation (30) est formée d'une grille perforée.

8. Procédé de détermination du décalage d'un premier objet par rapport à un deuxième objet,
par utilisation d'un capteur de déplacement incrémentiel selon une des revendications 1 à 7,
selon lequel au moins une voie de séparation (30), avec des zones conductrices (32) et des zones isolantes (34) disposées de manière périodiquement alternée, est mise en place sur le premier objet (10),
selon lequel une unité de balayage (22) pour le balayage de la voie de séparation (30) est mise en place sur le deuxième objet (20),
l'unité de balayage (22) comprenant au moins une première unité de détection (40) et une deuxième unité de détection (50) qui sont disposées l'une par rapport à l'autre selon une distance latérale d = n*(p/2) + q, où n est un nombre entier, p est la période de la voie de séparation (30), et 0 < |q| < p/2, avec plus particulièrement q = 0,25 p, et
le décalage étant déterminé à partir de signaux de commutation des unités de détection (40, 50),
**caractérisé :**
**en ce que** les unités de détection (40, 50) sont utilisées avec chacune un premier capteur inductif (41, 51) et un deuxième capteur inductif (42, 52) disposé à distance de ce premier,
**en ce que** les zones conductrices (32) et les zones isolantes (34) présentent des propriétés d'atténuation différentes pour les premiers capteurs inductifs (41, 51) et pour les deuxièmes capteurs inductifs (42, 52) et peuvent être distinguées par les premiers capteurs inductifs (41, 51) et les deuxièmes capteurs inductifs (42, 52) sur la base de ces propriétés d'atténuation différentes, et
**en ce que** les unités de détection (40, 50) sont utilisées de telle manière qu'elles fournissent un signal de commutation (45) appartenant à une zone conductrice (32) de la voie de séparation (30) si la différence ou le rapport des signaux de détection (43, 44) générés par cette zone conductrice (32) du premier capteur inductif (41, 51) et du deuxième capteur inductif (42, 52) qui appartiennent respectivement à chaque unité de détection (40,50) est plus faible qu'un seuil déterminé,
une commutation de MARCHE à ARRÊT, ou inverse, étant effectuée lors de la fourniture d'un signal de commutation.

9. Procédé selon la revendication 8,
**caractérisé :**
**en ce que**, pour éviter les rebonds de commutation, le seuil est réglé immédiatement après un événement de commutation d'une première valeur S à une deuxième valeur H, et
**en ce que** le seuil est à nouveau réglé à la première valeur S, aussitôt que le signal de détection du premier capteur inductif (41, 51) diffère du signal de détection du deuxième capteur inductif (42, 52) de plus de la deuxième valeur H.
